# EUROPEAN PATENT APPLICATION

(11) **EP 2 634 227 A1**
(43) Date of publication of application: **04.09.2013**
(21) Application number: 10858813.8
(22) Date of filing: 30.12.2010
(51) Int. Cl.: C09D 127/12, C09D 5/08

(54) **FLUORINE-CONTAINING ANTI-CORROSIVE COATING**

(30) Priority: 28.10.2010 CN 201010529543
(71) Applicant: Zhonghao Chenguang Research Institute of Chemical Industry Co., Ltd., Zigong, Sichuan 643201 (CN)
(72) Inventor: LIU, Bin, Zigong Sichuan 643201 (CN); XING, Huayan, Zigong Sichuan 643201 (CN)
(74) Representative: Ricker, Mathias
(86) International application number: PCT/CN2010/002211
(87) International publication number: WO 2012/055084

(57) **Abstract**

A fluorine-containing anti-corrosive coating is prepared by using fluororubber as basic film-forming substance, adding auxiliary agent, reinforcing agent and additive, kneading to obtain fluorine mixed compound, dissolving in organic solvent to obtain component A solution of the mixed compound; and while using it, mixing the component A solution with silane coupling agent as component B at a certain proportion, curing at low temperature and obtaining the fluorine-containing coating.

## Description

### Technical Field

The invention relates to an anti-corrosive coating, particularly to a fluorine-containing anti-corrosive coating.

### Background Art

Fluororubber is a synthetic polymer elastomer whose carbon atoms on main chain or side chain contain fluorine atoms. As compared with other rubbers, fluororubber has properties such as excellent high temperature resistance, oil resistance and chemical resistance to a variety of corrosion, and is widely used in the industries of aviation, chemical engineering, petroleum, machinery etc. With the development of industry in China, the requirement for the anti-corrosive performance of fluororubber is becoming higher, and the routine anti-corrosive coatings do not meet the requirement for using in the pipelines and equipments in industries such as chemical engineering, for example, if an anti-corrosive coating can not be applied under harsh conditions such as strong acid or alkali for a long time, it will bring more inconvenience to production and living; and frequently replacing the anti-corrosive products and equipments will surely affect normal production and increase operation cost of an enterprise. However, the present anti-corrosive coating products in the market are very expensive and difficult to apply in construction. There is a need to research and develop a novel coating with low cost which is easy for construction and has high anti-corrosive so as to replace the traditional coatings.

### Contents of the Invention

The object of the invention is to improve the traditional coatings and provide a fluorine-containing anti-corrosive coating which has properties such as excellent weather resistance, durability, corrosion resistance, abrasion resistance and tackiness resistance.

In order to achieve the object of the invention, a fluorine-containing anti-corrosive coating according to the invention is prepared by using fluororubber as basic film-forming substance, adding auxiliary agent, reinforcing agent and additive, kneading to obtain fluorine mixed compound, dissolving in organic solvent to obtain component A solution of the mixed compound; and while using it, mixing the component A solution with silane coupling agent as component B at a certain proportion, curing at low temperature and obtaining the fluorine-containing coating.

In the coating according to the invention, the fluororubber is F26 type fluororubber with a molecular weight of 30,000-50,000 and represented by the following composition: 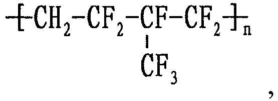 the auxiliary agent is active magnesium oxide and calcium hydroxide, the reinforcing agent is thermal carbon black MT N990, the additive is Aflux release agent, and the silane coupling agent is KH550.

In the coating according to the invention, the component A solution comprises the following raw materials by weight part: 100 parts of F26 type fluororubber, 5-12 parts of active magnesium oxide, 4-8 parts of calcium hydroxide, 20-30 parts of thermal carbon black MT N990, 1-2 parts of Aflux release agent and 40-90 parts of organic solvent.

In the coating according to the invention, the organic solvent is one or more selected from the group consisting of methyl isobutyl ketone, toluene, ketone and butanone.

In the coating according to the invention, the fluorine content of the fluorine-containing coating is 10-60wt%.

In the coating according to the invention, the curing ratio of the component A solution and the silane coupling agent as component B is 100:3-5, preferably 20:1.

In the coating according to the invention, the curing temperature of the component A solution and the silane coupling agent as component B is 30-80°C. If the curing temperature is 80°C during the curing process, the time for curing of the coating film can be shortened.

The fluorine-containing anti-corrosive coating according to the invention is improved on the basis of ordinary anti-corrosive coating, and the components of the inventive coating are optimized to take fluororubber as matrix of the main film-forming materials; the fluorine-containing coating is consisted of components A and B, component B as curing agent is added in component A solution while using in construction, the surface of the coated mixture will dry after 24 hours, and the coating film will be fully cured after 5 days. The advantages of the fluorine-containing coating according to the invention lie in that: it is easy to use in construction, it effectively overcome the shortcomings such as the need of high temperature vulcanization for fluororubber and the big difficulty for using in construction compared with the ordinary anti-corrosive coating, it is improved to apply under severe environment which is not suitable to applying ordinary anti-corrosive coatings, meanwhile it remains the properties of fluororubber such as excellent weather resistance, durability, corrosion resistance, abrasion resistance and tackiness resistance; and it is widely applied and popularized in some specific, important anti-corrosive field as an anti-corrosive coating with excellent performance. It is particularly suitable to be used as weather resistant and corrosion resistant film-forming coating for various large-scale metal construction members, and very suitable to be used as corrosion resistant coating which is resistant to acid, alkali and oxidant under harsh condition, and the inventive coating can be widely used in national economic construction fields such as petroleum, chemical engineering, machinery, refrigeration, aviation, military, aerospace and electronics.

### Embodiments

The following Examples are intended to further illustrate the present invention without limiting its scope.

F26 type fluororubber used in the following examples is purchased from Zhonghao Chenguang Research Institute of Chemical Industry; active magnesium oxide and superfine calcium hydroxide are purchased from Kyowa Hakko Chemical Co., Japan; thermal carbon black MT N990 is purchased from Cancarb limited, Canada; Aflux release agent is purchased from Rhein Chemie, Germany; silane coupling agent KH550 is purchased from Jiangsu Coupling Agent Company; organic solvent is analytical reagent available from market.

### Example 1

The composition of the fluorine mixed compound in component A solution is as follows:

| | |
|---|---|
| F26 type fluororubber | 100kg |
| active magnesium oxide | 8kg |
| superfine calcium hydroxide | 5kg |
| reinforcing agent (carbon black) | 20kg |
| release agent (Aflux) | 1kg. |

The above raw materials are kneaded in a mixing roll machine to give fluorine mixed compound.

The resulting fluorine mixed compound with 10% solid content is dissolved in a mixture of 112.5ml methyl isobutyl ketone and 12.5ml toluene until it is completely dissolved, and the component A solution is obtained. The component A solution and silane coupling agent KH550 as component B are mixed in a weight ratio of 20:1 while using in construction, and the mixture is sprayed or painted on the surface of substrates such as pipelines, reactors, outside walls and stainless steel for anti-corrosion.

### Example 2

The composition of the fluorine mixed compound in component A solution is as follows:

| | |
|---|---|
| F26 type fluororubber | 100kg |
| active magnesium oxide | 10kg |
| superfine calcium hydroxide | 7kg |
| reinforcing agent (carbon black) | 25kg |
| release agent (Aflux) | 1.5kg |

The above raw materials are kneaded in a mixing roll machine to obtain fluorine mixed compound.

The resulting fluorine mixed compound with 15% solid content is dissolved in a mixture of 112.5ml methyl isobutyl ketone and 12.5ml toluene until it is completely dissolved, and the component A solution is obtained. The component A solution and silane coupling agent KH550 as component B are mixed in a weight ratio of 20:1 while using in construction, and the mixture is sprayed or painted on the surface of substrates such as pipelines, reactors, outside walls and stainless steel for anti-corrosion.

### Example 3

The composition of the fluorine mixed compound in component A solution is as follows:

| | |
|---|---|
| F26 type fluororubber | 100kg |
| active magnesium oxide | 12kg |
| superfine calcium hydroxide | 8kg |
| reinforcing agent (carbon black) | 30kg |
| release agent (Aflux) | 2kg |

The above raw materials are kneaded in a mixing roll machine to obtain fluorine mixed compound.

The resulting fluorine mixed compound with 20% solid content is dissolved in a mixture of 112.5ml butanone and 12.5ml toluene until it is completely dissolved, and the component A solution is obtained. The component A solution and silane coupling agent KH550 as component B are mixed in a weight ratio of 20:1 while using in construction, and the mixture is sprayed or painted on the surface of substrates such as pipelines, reactors, outside walls and stainless steel for anti-corrosion.

### Example 4

The composition of the fluorine mixed compound in component A solution is as follows:

| | |
|---|---|
| F26 type fluororubber | 100kg |
| active magnesium oxide | 12kg |
| superfine calcium hydroxide | 8kg |
| reinforcing agent (carbon black) | 30kg |
| release agent (Aflux) | 2kg |

The above raw materials are kneaded in a mixing roll machine to obtain fluorine mixed compound.

The resulting fluorine mixed compound with 25% solid content is dissolved in a mixture of 112.5ml ketone and 12.5ml toluene until it is completely dissolved, and the component A solution is obtained. The component A solution and silane coupling agent KH550 as component B are mixed in a weight ratio of 20:1 while using in construction, and the mixture is sprayed or painted on the surface of substrates such as pipelines, reactors, outside walls and stainless steel for anti-corrosion.

The stability and the strength of paint film of the fluorine-containing anti-corrosive coating according to the invention are shown in Table 1.

**Table 1: the stability and the strength of paint film of the fluorine-containing anti-corrosive coating according to the invention**

| Composition of the coating | | Example 1 | Example 2 | Example 3 | Example 4 |
|---|---|---|---|---|---|
| F26 type fluororubber, kg | | 100 | 100 | 100 | 100 |
| Active magnesium oxide, kg | | 8 | 10 | 12 | 12 |
| Superfine calcium hydroxide, kg | | 5 | 7 | 8 | 8 |
| Reinforcing agent MT N990, kg | | 20 | 25 | 30 | 30 |
| Release agent (Aflux), kg | | 1 | 1.5 | 2 | 2 |
| Solid content of fluorine mixed compound | | 10% | 15% | 20% | 25% |
| Methyl isobutyl ketone /butanone/ ketone, ml | | 112.5 | 112.5 | 112.5 | 112.5 |
| Toluene, ml | | 12.5 | 12.5 | 12.5 | 12.5 |
| Stability of component A of the coating (compared with standing) | | No abnormal in 6 months | No abnormal in 6 months | No abnormal in 6 months | No abnormal in 6 months |
| After components A | Shear strength of the paint film, mpa | 1 | 2 | 3 | 4 |
| and B (20:1) are mixed and used in construction, and the coating mixture is fully cured | Room temperature × 24h, resistant to 98% sulfuric acid | The paint film do not change | The paint film do not change | The paint film do not change | The paint film do not change |
| | Room temperature × 72h, resistant to 98% sulfuric acid | The paint film is destroyed | The paint film do not change | The paint film do not change | The paint film do not change |
| | Room temperature × 168h, resistant to 98% sulfuric acid | The paint film is destroyed | The paint film is destroyed | The paint film do not change | The paint film do not change |

Although the invention has been described in detail with the above general explanation and specific embodiments, on the basis of the invention it is apparent that various modifications and changes to the invention may be made by a person skilled in the art without departing from the spirit of the invention, and the modifications and changes also fall within the scope of the invention.

### Industrial applicability

The fluorine-containing coating according to the invention has the properties such as excellent weather resistance, durability, corrosion resistance, abrasion resistance and tackiness resistance; and is very suitable to form a corrosion resistant coating which is resistant to acid, alkali and oxidant under harsh condition, and the inventive coating can be widely used in national economic construction fields such as petroleum, chemical engineering, machinery, refrigeration, aviation, military, aerospace and electronics.

## Claims

1. A fluorine-containing anti-corrosive coating, **characterized in that** the coating is prepared by using fluororubber as basic film-forming substance, adding auxiliary agent, reinforcing agent and additive, kneading to obtain fluorine mixed compound, dissolving in organic solvent to obtain component A solution of the mixed compound; and while using it, mixing the component A solution with silane coupling agent as component B at a certain proportion, curing at low temperature and obtaining the fluorine-containing coating.

2. The coating according to claim 1, **characterized in that** the fluororubber is F26 type fluororubber with a molecular weight of 30,000-50,000 and represented by the following composition: 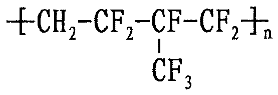 the auxiliary agent is active magnesium oxide and calcium hydroxide, the reinforcing agent is thermal carbon black MT N990, the additive is Aflux release agent, and the silane coupling agent is KH550.

3. The coating according to claim 2, **characterized in that** the component A solution comprises the following raw materials by weight part: 100 parts of F26 type fluororubber, 5-12 parts of active magnesium oxide, 4-8 parts of calcium hydroxide, 20-30 parts of thermal carbon black MT N990, 1-2 parts of Aflux release agent and 40-90 parts of organic solvent.

4. The coating according to any one of claims 1 to 3, **characterized in that** the organic solvent is one or more selected from the group consisting of methyl isobutyl ketone, toluene, ketone and butanone.

5. The coating according to any one of claims 1 to 3, **characterized in that** the fluorine content of the fluorine-containing coating is 10-60wt%.

6. The coating according to any one of claims 1 to 3, **characterized in that** the curing ratio of the component A solution and the silane coupling agent as component B is 100:3-5.

7. The coating according to claim 6, **characterized in that** the curing ratio of the component A solution and the silane coupling agent as component B is 20:1.

8. The coating according to any one of claims 1 to 3, **characterized in that** the curing temperature of the component A solution and the silane coupling agent as component B is 30-80°C.
